# EUROPEAN PATENT APPLICATION

(11) **EP 4 707 412 A1**
(43) Date of publication of application: **11.03.2026**
(21) Application number: 25804562.4
(22) Date of filing: 19.06.2025
(51) Int. Cl.: C22B 3/26, C22B 3/38, C22B 3/32, C22B 3/40, C22B 59/00, C22B 26/20

(54) **ALKALINE-EARTH METAL SAPONIFYING AGENT AND USE THEREOF**

(30) Priority: 11.07.2024 CN 202410928603
(71) Applicant: Suzhou Botree Cycling Sci & Tech Co., Ltd, Suzhou, Jiangsu 215128 (CN)
(72) Inventor: YANG, Xizu, Suzhou Jiangsu 215128 (CN); LIU, Chunwei, Suzhou Jiangsu 215128 (CN); LIN, Xiao, Suzhou Jiangsu 215128 (CN); FENG, Hao, Suzhou Jiangsu 215128 (CN)
(74) Representative: Murgitroyd & Company
(86) International application number: PCT/CN2025/101913
(87) International publication number: WO 2026/012081

(57) **Abstract**

The present application belongs to the technical field of hydrometallurgy, which discloses an alkaline earth metal saponifier and a use thereof. The saponifier is a powder of alkaline earth metal compound, wherein a maximum particle size of the powder is less than 200 µm; and a purity of the powder is not less than 80%. The alkaline earth metal saponifier is mixed with a solution of an acidic extractant for saponification to obtain a saponified organic phase. The alkaline earth metal saponifier or saponification method provided herein can be used for metal extraction. Compared with conventional processes, the present application uses an alkaline earth metal saponifier for direct saponification, which not only produces no saponification wastewater but also achieves a high conversion rate of alkaline earth metal, while avoiding solid residue issues. Furthermore, the resulting saponified organic phase exhibits excellent fluidity and stability. The saponifier provided by the present application has a wide range of sources and can be recycled, significantly lowering saponification costs.

## Description

### Cross-Reference to Related Application

The present application claims priority to Chinese patent application No. 202410928603.1 filed with the China Patent Office on July 11, 2024 and entitled "Alkaline Earth Metal Saponifier and Use thereof", which is incorporated by reference herein in its entirety.

### Technical Field

The present application relates to the technical field of hydro metallurgy, and specifically relates to an alkaline earth metal saponifier and a use thereof.

### Background Art

Extraction, as a critical means for advanced separation and enrichment of metals, has been widely used in hydrometallurgical industry. The main process of extraction includes steps of saponification-extraction-scrubbing-stripping, and the like. Conventional saponification primarily uses alkaline solutions, such as liquid caustic soda and ammonia water as saponifiers, which offer advantages of well-established technology, wide application, simple operation, and low generation of saponification wastewater. However, conventional saponification processes are associated with high costs, as the alkaline solutions used cannot be recycled, and it also faces significant challenges in the treatment of generated wastewater of sodium sulfate and ammonium sulfate. The existing magnesium saponification processes are mainly classified into two types: converted magnesium saponification and direct magnesium saponification. Converted magnesium saponification refers to the use of magnesium salt solution in the original sodium saponification and ammonia saponification system to replace sodium/ammonia in the saponified organic phase with magnesium, thereby obtaining a magnesium-loaded organic phase. However, this method does not fundamentally solve the problems of high saponification cost and high treatment pressure of sodium/ammonium sulfate. Direct magnesium saponification refers to direct saponification of a blank organic phase by using a magnesium-containing slurry. This method solves the issues of high saponification cost and high treatment pressure of sodium/ammonium sulfate, but it may give rise to new problems as follows. First, the low solubility of inorganic magnesium salts in water often leads to increased saponification wastewater, reduced magnesium conversion rates, and consequently, excessive consumption of slurry. At the same time, the residual magnesium slurry is difficult to collect, making the industrialization unviable. Secondly, due to incomplete dissolution of most magnesium compounds, a fraction of powder becomes entrained in the organic phase and is co-transported into the extraction stage, which will adversely affect the extraction. Currently, the use of solid powder for direct saponification has been proposed. However, this concept is only put forward and lacks in-depth research, which neither proposes a specific type of solid powder nor demonstrates its potential technical benefits.

CN 116949289A discloses a phosphonyl hydroxy carboxylic acid, and a use and a method thereof for separating yttrium, which primarily explains the chemical formula of the phosphonyl hydroxy carboxylic acid and the operation method for separating yttrium. It is stated in the patent that solid powder can be used for direct saponification; however, neither is such solid powder described in detail, nor is its use for saponifying extractants disclosed in the examples.

CN 117735579A discloses a high-activity superfine composite phase magnesium oxide, a preparation method and a use thereof. The composite phase magnesium oxide contains basic magnesium chloride. When used for saponifying the extractant, the composite phase magnesium oxide not only introduces chloride ion contamination in practical applications but also leads to the formation of insoluble organic magnesium chloride and water due to the presence of the basic magnesium chloride. Large saponification will bring a certain amount of saponification wastewater. At the same time, it is clearly specified in the examples that there is no three-phase substance at the oil-water interface, so saponification wastewater is produced during the saponification process.

Therefore, there is an urgent need to develop a saponifier having advantages of strong universality, low dosage, good saponification effect, good subsequent extraction effect, no wastewater production, and recyclability.

### Summary of the Invention

It is the object of the present application to provide an alkaline earth metal saponifier and a use thereof to overcome the problems existing in the prior art.

In order to achieve the above object, in a first aspect of the present application, provided is an alkaline earth metal saponifier, wherein the saponifier is a powder of alkaline earth metal compound;
wherein a maximum particle size of the powder is less than 200 µm; and a purity of the powder is not less than 80%.

In a second aspect of the present application, provided is a use of the alkaline earth metal saponifier of the first aspect in saponification of acidic extractants.

In a third aspect of the present application, provided is a saponification method using the alkaline earth metal saponifier of the first aspect, wherein the method comprises: mixing the alkaline earth metal saponifier with a solution of an acidic extractant for saponification to obtain a saponified organic phase.

In a fourth aspect of the present application, provided is a saponified organic phase obtained by the method of the third aspect, wherein the saponified organic phase is an organic acid salt solution of an alkaline earth metal at a concentration of 0.1-2 mol/L.

In a fifth aspect of the present application, provided is a use of the method of the third aspect in metal extraction.

The beneficial technical effects of the present application obtained through the above technical solutions are as follows:
(1) The alkaline earth metal saponifier provided by the present application has a specific maximum particle size and a specific purity, which contributes to improved saponification effects (such as actual saponification degree, precipitation situation, saponification time, phase separation time) and facilitates industrialization.
(2) The alkaline earth metal saponifier provided by the present application enables saponification of a variety of acidic extractants, and the obtained saponified organic phase shows excellent extraction effects, which achieves complete separation of nickel-cobalt and magnesium (carboxylic acid extractants) with a separation efficiency exceeding 99%.
(3) Compared with conventional processes, the present application uses an alkaline earth metal saponifier for direct saponification, which not only produces no saponification wastewater during the process but also achieves a high conversion rate of the alkaline earth metal, while avoiding solid residue issues. Furthermore, the resulting saponified organic phase exhibits excellent fluidity and stability.
(4) The saponifier provided by the present application has a wide range of sources and can be recycled, significantly lowering saponification costs.

### Brief Description of the Drawings

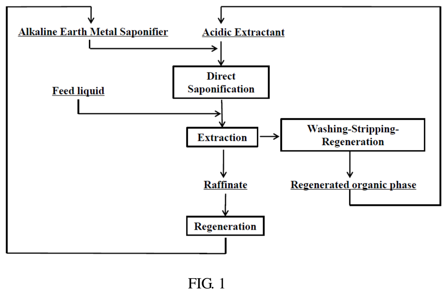

FIG. 1 is a flow diagram of an extraction process of the present application.

### Detailed Description of the Invention

Neither the endpoints nor any of the values of the ranges disclosed in the present application are limited to that precise range or value, and those ranges or values should be understood to include values close to those ranges or values. For numerical ranges, one or more new numerical ranges may be obtained by combining between the endpoint values of the ranges, between the endpoint values of the ranges and individual point values, and between individual point values, which shall be deemed to be specifically disclosed in the present application.

In a first aspect of the present application, provided is an alkaline earth metal saponifier, wherein the saponifier is a powder of alkaline earth metal compound;
wherein a maximum particle size of the powder is less than 200 µm; and a purity of the powder is not less than 80%.

By defining the maximum particle size and purity of the saponifier powder in the present application, it is possible to obtain a saponification effect superior to the prior art, resulting in less precipitate during saponification, shorter saponification and phase separation times.

The powder of alkaline earth metal compound of the present application is commercially available (e.g., analytical or industrial grade purity) or customized, or regenerated by one or a combination of spray pyrolysis, roasting, calcination, reductive pyrolysis, and precipitation. In the present application, powder with corresponding maximum particle size can be obtained by grinding coarse powder and then sieving. When produced by the above process, the purity (which may be industrial grade purity) can be tested by combining XRD and SEM.

In some embodiments of the present application, the maximum particle size of the powder is, for example, 180 µm, 106 µm, 75 µm, 44 µm, 20 µm, and any value within a range consisting of any two of the above numerical values. In some embodiments of the present application, the maximum particle size of the powder is less than 120 µm, preferably less than 50 µm. In the present application, the smaller the maximum particle size, the shorter the saponification time.

In some embodiments of the present application, the purity of the powder is, for example, 80%, 85%, 92%, 98%, and any value within a range consisting of any two of the above numerical values. In some embodiments of the present application, the purity of the powder is not less than 85%, preferably not less than 90%. In the present application, the higher the purity of the saponifier, the lower the amount of precipitate and the shorter the phase separation time.

In some embodiments of the present application, the alkaline earth metal is magnesium and/or calcium.

In some embodiments of the present application, the compound is a basic compound.

In some embodiments of the present application, the basic compound is at least one selected from the group consisting of oxides, hydroxides, carbonates, and bicarbonates.

In some embodiments of the present application, the powder of alkaline earth metal compound is at least one selected from the group consisting of magnesium oxide powder, magnesium hydroxide powder, magnesium carbonate powder, magnesium bicarbonate powder, calcium oxide powder, calcium hydroxide powder, and calcium carbonate powder.

In some embodiments of the present application, the powder of alkaline earth metal compound is free of impurity ions including F and Cl.

In some embodiments of the present application, the contents of impurity ions including Fe, Al, Zn, Cu, and Cd in the powder of alkaline earth metal compound are each less than 0.01%.

In a second aspect of the present application, provided is a use of the alkaline earth metal saponifier of the first aspect in saponification of acidic extractants.

In a third aspect of the present application, provided is a saponification method using the alkaline earth metal saponifier of the first aspect, wherein the method comprises: mixing the alkaline earth metal saponifier with a solution of an acidic extractant for saponification to obtain a saponified organic phase.

In some embodiments of the present application, the solution of an acidic extractant contains an acidic extractant at a volume fraction of 25%.

In some embodiments of the present application, the conditions for saponification comprise: stirring for 1-10 min. In the present application, the specific stirring time is determined by the point at which saponification reaches its limit and stabilizes. Specifically, the extractant shows uniform color, does not continue to react, and is free of bubbles. According to the actual test, comparison of different stirring times is conducted for each new saponification condition or saponifier to assess stability under varying saponification times (after stopping, no precipitation or layering is formed, and the metal loading no longer changes with time, which can be considered as saponification completed).

In some embodiments of the present application, the acidic extractant is a carboxylic acid extractant and/or a phosphoric acid extractant.

In some embodiments of the present application, the carboxylic acid extractant is 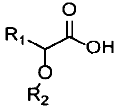 and/or 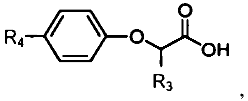 wherein R₁ and R₂ are independently C₃-C₁₂ linear or branched alkyl, R₃ is C₄-C₉ linear or branched alkyl, R₄ is C₃-C₁₀ linear or branched alkyl, preferably

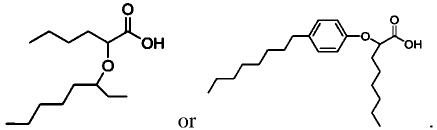

The carboxylic acid extractant is at least one selected from the group consisting of BC196, BC191, BC194, and BC211.

In some embodiments of the present application, the phosphoric acid extractant is P204.

In a fourth aspect of the present application, provided is a saponified organic phase obtained by the method of the third aspect.

In some embodiments of the present application, the saponified organic phase is a carboxylate solution of an alkaline earth metal at a concentration of 0.1-2 mol/L.

The saponified organic phase of the present application exhibits excellent extraction effects, which enables complete separation of nickel-cobalt and calcium/magnesium with a separation efficiency exceeding 99% when a carboxylic acid extractant is used. In addition, the saponified organic phase exhibits a high saponification degree (up to 100%), along with good fluidity and enhanced stability.

In traditional saponification processes, when alkaline solutions are used, the degree of saponification typically cannot exceed 70%; otherwise, over-saponification will occur, which significantly reduces the extraction performance of the organic phase. The saponification degree of conventional saponification is usually 50-55%, and the loading capacity of the organic phase is typically 11-14 g/L. Continuing to increase the saponification degree may result in lower organic phase mobility, lower extraction performance, and poorer stability. The use of slurry often fails to achieve a high actual saponification degree.

By using the alkaline earth metal saponifier of the present application, the actual saponification degree can reach 100%, the loading capacity of the organic phase can reach more than 22-28 g/L, while avoiding any issue related to the organic phase (not over-saponification), which means that the processing capacity of the same amount of organic phase is increased by 50% on the basis of conventional saponification. In this way, the extraction efficiency of the saponified organic phase can be substantially improved, and thus the processing capacity can be greatly improved, which is a very significant progress in the extraction industry.

In addition, the raffinate obtained from the subsequent extraction can further recover alkaline earth metal(s) through a regeneration process and prepare high-purity compounds, which can be sold directly as products or returned to the front section as a saponifier for direct saponification.

In a fifth aspect of the present application, provided is a use of the method of the third aspect in metal extraction.

Specifically, as shown in FIG. 1, the saponified organic phase obtained by the method is mixed with a feed liquid (such as a magnesium-containing feed liquid) for extraction to obtain a carboxylate solution loaded with other metals and a raffinate containing alkaline earth metal(s); the carboxylate solution loaded with other metals is mixed with inorganic acids of different concentrations, then scrubbing, stripping and regeneration are conducted to obtain an extractant, which is recycled; the raffinate containing alkaline earth metal(s) is regenerated by a regeneration process to obtain a powder of alkaline earth metal compound. The regeneration process comprises one of precipitation, calcination, reduction, and spray pyrolysis, or a combination selected therefrom.

The present application will be described in detail with reference to the examples below.

The following examples and comparative examples with no specific conditions indicated follow the conventional conditions or the conditions suggested by the manufacturer. The reagents or instruments used without indication of the manufacturer are conventional products that are commercially available.

### Example 1

This example was used to illustrate a saponification method for an acidic extractant using magnesium oxide powder.

Magnesium oxide powder: obtained by spray pyrolysis of a magnesium nitrate solution, having a maximum particle size of less than 20 µm, and a purity of 98%.

Acidic extractant solution: comprising a BC196 extractant 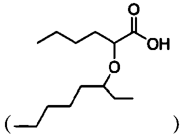 and a diluent Escaid 110, the volume fraction of the BC196 extractant being 25%.

The magnesium oxide powder was mixed with the acidic extractant solution and saponified for 2.5 min under a stirring condition to obtain a saponified organic phase, wherein, the dosage of magnesium oxide powder was based on the theoretical saponification degree of 100% for the acidic extractant (BC196) at a volume fraction of 25%.

The obtained saponified organic phase exhibited good fluidity, with no solid powder precipitation observed after standing for more than 48 h, while showing a clear and transparent appearance and good stability.

### Example 2

Saponification was carried out according to the method of Example 1, excepting that the extractant was replaced with BC194 extractant

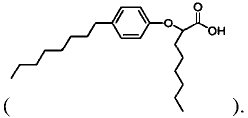

### Example 3

Saponification was carried out according to the method of Example 1, excepting that the purity of the magnesium oxide powder was 80%.

### Example 4

Saponification was carried out according to the method of Example 1, excepting that the purity of the magnesium oxide powder was 92%, which was obtained by spray pyrolysis of a magnesium chloride solution.

### Example 5

Saponification was carried out according to the method of Example 1, excepting that the purity of the magnesium oxide powder was 85%.

### Example 6

Saponification was carried out according to the method of Example 1, excepting that the maximum particle size of the magnesium oxide powder was 75 µm, which was obtained by evaporation and reductive calcination of a magnesium sulfate solution.

### Example 7

Saponification was carried out according to the method of Example 1, excepting that the maximum particle size of the magnesium oxide powder was 44 µm, which was obtained by precipitation and calcination of a magnesium sulfate solution.

### Example 8

Saponification was carried out according to the method of Example 1, excepting that the maximum particle size of the magnesium oxide powder was 106 µm.

### Example 9

Saponification was carried out according to the method of Example 1, excepting that the maximum particle size of the magnesium oxide powder was 180 µm.

### Example 10

Saponification was carried out according to the method of Example 1, excepting that the extractant was replaced with P204.

### Example 11

Saponification was carried out according to the method of Example 1, excepting that the magnesium oxide powder was replaced with magnesium hydroxide powder.

### Example 12

Saponification was carried out according to the method of Example 1, excepting that the magnesium oxide powder was replaced with magnesium carbonate powder.

### Example 13

Saponification was carried out according to the method of Example 1, excepting that the magnesium oxide powder was replaced with magnesium bicarbonate powder.

### Example 14

Saponification was carried out according to the method of Example 1, excepting that the magnesium oxide powder was replaced with calcium oxide powder.

### Example 15

Saponification was carried out according to the method of Example 1, excepting that the magnesium oxide powder was replaced with calcium hydroxide powder.

### Example 16

Saponification was carried out according to the method of Example 1, excepting that the magnesium oxide powder was replaced with calcium carbonate powder.

### Comparative Example 1

Saponification was carried out according to the method of Example 1, excepting that the magnesium oxide powder was replaced with magnesium hydroxide slurry (20% aqueous solution of light magnesium oxide).

The obtained saponified organic phase showed good fluidity, but a large amount of saponification wastewater was produced. At the same time, a substantial portion of light magnesium oxide remained undissolved, which sedimented at the bottom of the aqueous phase and thus failed to be utilized. The saponified organic phase was separated and placed in a separate beaker. After standing for more than 48 hours, solid powder precipitated at the bottom of the organic phase, and the organic phase turned turbid rather than clear.

### Comparative Example 2

Saponification was carried out according to the method of Example 3, excepting that the maximum particle size of the magnesium oxide powder was 600 µm.

### Comparative Example 3

Saponification was carried out according to the method of Example 3, excepting that the maximum particle size of the magnesium oxide powder was 212 µm.

### Comparative Example 4

Saponification was carried out according to the method of Example 3, excepting that the maximum particle size of the magnesium oxide powder was 325 µm.

### Comparative Example 5

Saponification was carried out according to the method of Example 1, excepting that the magnesium oxide powder was replaced with a 10.8% liquid caustic soda solution.

The obtained saponified organic phase exhibited poor fluidity and turbidity, showing over-alkalization. Its sluggish movement and instability in the extraction tank prevented further experiments therein. A portion of the organic phase was transferred to a separatory funnel for extraction test. After the organic phase was mixed with the feed liquid, a substantial nickel and cobalt precipitate was generated. This resulted in poor organic extraction performance, a failure to meet the extraction requirements and to determine the loading capacity, ultimately preventing the experiment from proceeding.

### Comparative Example 6

Saponification was carried out according to the method of Example 1, excepting that the purity of the magnesium oxide powder was 50%.

### Comparative Example 7

Saponification was carried out according to the method of Example 1, excepting that the purity of the magnesium oxide powder was 75%.

### Comparative Example 8

Saponification was carried out according to the method of Example 1, excepting that the purity of the magnesium oxide powder was 60%.

### Comparative Example 9

Saponification was carried out according to the method of Example 1, excepting that the extractant was replaced with P507, and the magnesium oxide powder was replaced with a mixture of MgO (92%) and Mg(OH)Cl (8%).

The formation of MgCl₂, which is insoluble in the organic phase, resulting from the contact between Mg(OH)Cl and the extractant, affected the actual saponification effect, resulting in an actual saponification degree of only 90%. In addition, a portion of MgCl₂ remained suspended in the organic phase, which not only slowed the phase separation after saponification but also introduced impurities into the extraction system, leading to liquid contamination. Still, a small amount of wastewater was generated.

### Test samples

The feed liquid to be extracted shown in Table 1 was subjected to an eight-stage continuous extraction using the saponified organic phase obtained in Examples 1-16 and Comparative Examples 1-9.

**Table 1**

| Metal species | Ni | Co | Mn | Mg |
|---|---|---|---|---|
| Content, g/L | 4.413 | 0.4642 | 3.191 | 4.194 |

After extraction, the loaded organic phase was sampled and stripped with 7N sulfuric acid at a phase ratio of 1:1 to determine the loading capacity of the organic phase.

The loading capacity of the organic phase of Example 1 was shown in Table 2, and the ion concentrations of the raffinate were shown in Table 3.

**Table 2**

| Metal species | Ni | Co | Mn | Mg |
|---|---|---|---|---|
| Content, g/L | 23.65 | 1.71 | 1.32 | 0.03 |

**Table 3**

| Metal species | Ni | Co | Mn | Mg |
|---|---|---|---|---|
| Content, g/L | 0.01 | 0.004 | 0.06 | 6.15 |

It can be seen that the loading capacity of the organic phase was 26.71 g/L, and could still be perfectly maintained after continuous and stable operation, leading to good operation in the extraction tank. This value has basically reached the maximum loading capacity of BC196 at a saponification degree of 100% at this concentration, which has reached the ultimate capacity of the extractant. At this time, the concentration of magnesium carboxylate was 0.5 mol/L, and the separation efficiency of nickel-cobalt and magnesium was above 99%.

The loading capacity of the organic phase of Comparative Example 1 was shown in Table 4, and the ion concentrations of the raffinate were shown in Table 5.

**Table 4**

| Metal species | Ni | Co | Mn | Mg |
|---|---|---|---|---|
| Content, g/L | 8.59 | 0.62 | 0.68 | 0.04 |

**Table 5**

| Metal species | Ni | Co | Mn | Mg |
|---|---|---|---|---|
| Content, g/L | 1.13 | 0.19 | 1.54 | 5.85 |

It can be seen that the loading capacity of the organic phase was 9.93 g/L, which was basically the maximum loading capacity of BC196 at a saponification degree of 40% at this concentration, which was consistent with the loading capacities of saponified organic phases of conventional saponification and existing magnesium saponification process. At this point, the concentration of magnesium carboxylate was only 0.2 mol/L.

A summary of the testing of Examples 1-16 and Comparative Examples 1-9 was shown in Table 6.

**Table 6**

| No. | Wastewat er amount | Saponification degree /% | | Loadin g capacit y of organi c phase, g/L | Precipita te | Fluidit y | Saponificati on time | Phase separatio n time | Industrializati on difficulty |
|---|---|---|---|---|---|---|---|---|---|
| | | Theoretic al | Actu al | | | | | | |
| Example 1 | None | 100% | 100% | 26.71 | None | Good | < 3 min | <10 s | Low |
| Example 2 | None | 100% | 100% | 25.82 | None | Good | < 3 min | <10 s | Low |
| Example 3 | None | 100% | 100% | 26.03 | Small amount | Good | < 3 min | < 2 min | Low |
| Example 4 | None | 100% | 100% | 25.94 | Trace amount | Good | < 3 min | <40 s | Low |
| Example 5 | None | 100% | 100% | 26.01 | Small amount | Good | < 3 min | < 1 min | Low |
| Example 6 | None | 100% | 100% | 25.84 | None | Good | < 3.5 min | <10 s | Low |
| Example 7 | None | 100% | 100% | 25.91 | None | Good | < 3 min | <10 s | Low |
| Example 8 | None | 100% | 100% | 26.31 | None | Good | < 3.5 min | <10 s | Low |
| Example 9 | None | 100% | 100% | 26.25 | None | Good | < 4 min | <10 s | Low |
| Example 10 | None | 100% | 100% | 23.38 | None | Good | < 3 min | <10 s | Low |
| Example 11 | None | 100% | 100% | 26.01 | None | Good | < 3 min | <10 s | Low |
| Example 12 | None | 100% | 100% | 25.99 | None | Good | < 3 min | <10 s | Low |
| Example 13 | None | 100% | 100% | 26.12 | None | Good | < 3 min | <10 s | Low |
| Example 14 | None | 100% | 100% | 26.21 | None | Good | < 3 min | <10 s | Low |
| Example 15 | None | 100% | 100% | 26.00 | None | Good | < 3 min | <10 s | Low |
| Example 16 | None | 100% | 100% | 25.97 | None | Good | < 3 min | <10 s | Low |
| Comparati ve Example 1 | Very large | 100% | 40% | 9.93 | Large amount | Good | < 5 min | > 5 min | High |
| Comparati ve Example 2 | None | 100% | 100% | 26.22 | Small amount | Good | > 8 min | > 2 min | Medium |
| Comparati ve Example 3 | None | 100% | 100% | 25.88 | Small amount | Good | >5 min | >2 min | Medium |
| Comparati ve Example 4 | None | 100% | 100% | 26.08 | Small amount | Good | >6 min | >2 min | Medium |
| Comparati ve Example 5 | Large | 100% | - | - | None | Very poor | - | - | - |
| Comparati ve Example 6 | None | 100% | 100% | 25.35 | Medium amount | Good | < 3 min | > 10 min | Medium |
| Comparati ve Example 7 | None | 100% | 100% | 25.96 | Medium small amount | Good | < 3 min | > 3 min | Medium |
| Comparati ve Example 8 | None | 100% | 100% | 26.18 | Medium amount | Good | < 3 min | >7 min | Medium |
| Comparati ve Example 9 | Small | 100% | 90% | 20.84 | Medium amount | Good | < 3 min | < 3 min | High |

Among them, theoretical saponification degree refers to a value that can be theoretically achieved by adding corresponding saponifiers; actual saponification degree refers to an actual value obtained after adding corresponding saponifiers according to the theoretical saponification degree. This value represents the maximum conversion rate of the saponifier under this condition. The higher the actual value, the higher the conversion rate and the better the saponification effect, which directly affects the difficulty of industrialization and the cost after industrialization.

The loading capacity of the organic phase is a quantitative expression of actual saponification degree, which is directly related to actual saponification degree. The higher the loading capacity of the organic phase, the better the subsequent extraction effect.

Precipitate refers to the precipitates generated during saponification, which will directly affect the difficulty of industrialization and operation. The greater the amount of the precipitate, the more challenging the industrialization becomes and the more difficult the operation is, leading to greater requirements for equipment.

Saponification time refers to the time required for the saponification process to reach the saponification limit under these conditions (the organic phase remains stable after stopping saponification, and the loading capacity of the organic phase does not change with saponification time) and stabilization, which directly affects the difficulty of industrialization. Usually this value should be less than 5 min, and on this basis, the smaller the better.

Phase separation time refers to the time that needs to stand for phase separation after saponification is completed, which directly affects the difficulty of industrialization. Usually, this value should be less than 3 min. On this basis, the smaller the value, the better the effect.

Based on the results from Table 6, the analyses are as follows:
Examples 1 and 2 illustrated that the effects of different extractants were essentially the same, demonstrating the versatility of the present application to extractants.

Examples 1, 3, 4 and 5 compared the effects of different purities of the saponifier. Although all basically achieved good results, the precipitate and phase separation time increased with the decrease of purity.

Examples 1, 6, 7, 8 and 9 compared the effects of different maximum particle sizes of the saponifier. Although all achieved good results, the saponification time increased with the increase of the maximum particle size.

Examples 1, 4, 6, and 7 compared the effects of different sources of the saponifier. The results showed no significant influence from the sources, demonstrating the universality of the present application to saponifier origins.

In addition, a comparison between Example 1 with Comparative Examples 6, 7, and 8 indicated that the purity of the saponifier was not within the range described in the present application, both the precipitate and phase separation time increased significantly, resulting in a considerable influence.

A comparison between Example 3 with Comparative Examples 2, 3, and 4 indicated that the particle size of the saponifier was not within the range described in the present application, the saponification time was greatly increased, resulting in a considerable influence.

A comparison between Example 1 with Comparative Examples 1 and 5 indicated that neither a slurry nor a liquid caustic soda solution could achieve the effect of the present application, showing a substantial difference in performance.

Examples 1 and 10 compared different extractants, it can be seen that the present application was also applicable to phosphoric acid extractants.

Examples 1, 11, 12, 13, 14, 15 and 16 compared different saponifiers, which indicated that other alkaline earth metal compounds could also complete saponification.

It could be seen from Comparative Example 9 that if a saponifier was added according to the theoretical demand of magnesium, the actual saponification degree failed to reach the theoretical saponification. At the same time, a certain amount of wastewater was produced, while introducing impurity ions, which will greatly affect the difficulty of industrial operations.

Preferred embodiments of the present application have been described in detail above, however, the present application is not limited thereto. Within the scope of the technical concept of the present application, various simple modifications can be made to the technical solutions of the present application, including combinations of various technical features in any other suitable manner. These simple modifications and combinations should also be regarded as the contents disclosed in the present application and fall within the scope of protection of the present application.

### Industrial Applicability

The present application belongs to the technical field of hydrometallurgy, which discloses an alkaline earth metal saponifier and a use thereof. The saponifier is a powder of alkaline earth metal compound, wherein a maximum particle size of the powder is less than 200 µm; and a purity of the powder is not less than 80%. The alkaline earth metal saponifier is mixed with a solution of an acidic extractant for saponification to obtain a saponified organic phase. The alkaline earth metal saponifier or saponification method provided herein can be used for metal extraction. Compared with conventional processes, the present application uses an alkaline earth metal saponifier for direct saponification, which not only produces no saponification wastewater but also achieves a high conversion rate of alkaline earth metal, while avoiding solid residue issues. Furthermore, the resulting saponified organic phase exhibits excellent fluidity and stability. The saponifier provided by the present application has a wide range of sources and can be recycled, significantly lowering saponification costs.

## Claims

1. An alkaline earth metal saponifier, wherein the saponifier is a powder of alkaline earth metal compound;
wherein a maximum particle size of the powder is less than 200 µm; and a purity of the powder is not less than 80%.

2. The alkaline earth metal saponifier according to claim 1, wherein the maximum particle size of the powder is less than 120 µm, preferably less than 50 µm;
preferably, the purity of the powder is not less than 85%, preferably not less than 90%.

3. The alkaline earth metal saponifier according to claim 1 or 2, wherein the alkaline earth metal is magnesium and/or calcium;
preferably, the compound is a basic compound;
preferably, the basic compound is at least one selected from the group consisting of oxides, hydroxides, carbonates, and bicarbonates;
preferably, the alkaline earth metal compound powder is at least one selected from the group consisting of magnesium oxide powder, magnesium hydroxide powder, magnesium carbonate powder, magnesium bicarbonate powder, calcium oxide powder, calcium hydroxide powder, and calcium carbonate powder.

4. A use of the alkaline earth metal saponifier according to any one of claims 1 to 3 in the saponification of an acidic extractant.

5. A saponification method using the alkaline earth metal saponifier according to any one of claims 1 to 3, wherein the method comprises: mixing the alkaline earth metal saponifier with a solution of an acidic extractant for saponification to obtain a saponified organic phase.

6. The method according to claim 5, wherein the saponification condition comprises: stirring for 1-10 min.

7. The method according to claim 5 or 6, wherein the acidic extractant is a carboxylic acid extractant and/or a phosphoric acid extractant; preferably, the carboxylic acid extractant is 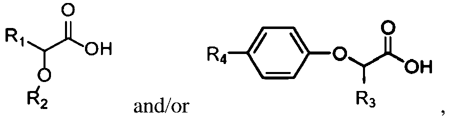 wherein R₁ and R₂ are independently C₃-C₁₂ linear or branched alkyl, R₃ is C₄-C₉ linear or branched alkyl, R₄ is C₃-C₁₀ linear or branched alkyl, preferably 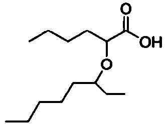 or 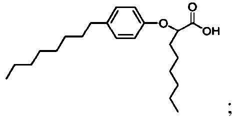 preferably, the phosphoric acid extractant is P204.

8. A saponified organic phase obtained by the method according to any one of claims 5 to 7.

9. The saponified organic phase according to claim 8, wherein the saponified organic phase is an organic acid salt solution of an alkaline earth metal at a concentration of 0.1-2 mol/L.

10. A use of the method according to any one of claims 5 to 7 in metal extraction.
